# EUROPEAN PATENT SPECIFICATION

(11) **EP 4 484 586 B1**
(45) Date of publication and mention of the grant of the patent: **22.04.2026**
(21) Application number: 23926868.3
(22) Date of filing: 31.03.2023
(51) Int. Cl.: C21D 8/02, C22C 38/02, C21D 9/46, C22C 38/00, C22C 38/04, C22C 38/58, C22C 38/50, C22C 33/06, C21D 1/02, C21D 6/00, B22D 11/16, C22C 33/04

(54) **PREPARATION METHOD FOR ULTRA-LARGE HEAT INPUT WELDING STEEL**
HERSTELLUNGSVERFAHREN FÜR SCHWEISSSTAHL MIT ULTRA-HOHEM WÄRMEEINTRAG
PROCÉDÉ DE PRÉPARATION POUR ACIER DE SOUDAGE À APPORT DE CHALEUR ULTRA-HAUTE

(30) Priority: 13.03.2023 CN 202310238411
(43) Date of publication of application: 01.01.2025
(73) Proprietor: Zhangjiagang Rongsheng Special Steel Co. Ltd., Suzhou, Jiangsu 215625 (CN); Institute of Research of Iron and Steel, Jiangsu Province/Sha-Steel, Co. Ltd (CN), Suzhou, Jiangsu 215625 (CN); Jiangsu Shagang Group Co., Ltd., Suzhou, Jiangsu 215625 (CN)
(72) Inventor: ZHAO, Fu, Suzhou, Jiangsu 215625 (CN); ZHANG, Yu, Suzhou, Jiangsu 215625 (CN); WANG, Na, Suzhou, Jiangsu 215625 (CN)
(74) Representative: Potter Clarkson
(86) International application number: PCT/CN2023/085313
(87) International publication number: WO 2024/187516

(56) References cited:
- CN-A- 101 086 051
- CN-A- 101 684 534
- CN-A- 102 080 193
- CN-A- 102 965 574
- CN-A- 103 451 536
- CN-A- 104 726 787
- CN-A- 104 726 787
- CN-A- 112 746 218
- CN-A- 114 277 314
- CN-A- 114 657 467
- CN-A- 114 703 424
- CN-A- 114 703 424
- CN-B- 103 205 644
- KR-A- 20020 008 854

## Description

### CROSS-REFERENCE TO RELATED APPLICATIONS

The present application claims priority to Chinese Patent Application No. 202310238411.3, filed to the China Patent Office on March 13, 2023 and entitled "Ultra-high Heat Input Welding Steel and Preparation Method therefor".

### TECHNICAL FIELD

The present application belongs to the technical field of steel rolling, and particularly relates to ultra-high heat input welding steel and a preparation method therefor.

### BACKGROUND

In the fields of ships, architectures, bridges and other large steel structures, welding is a key link of manufacturing, and increasing heat input may improve the welding efficiency, and shorten an engineering manufacturing cycle. Especially for thick steel plates, a conventional welding method requires multiple passes of welding molding, and requires tedious auxiliary work before welding and between layers as well, while adopting a high heat input welding method may achieve once pass molding, and the production efficiency is improved several times or dozens of times. Therefore, in each engineering field, the manufacturing of large steel welding structures tends to adopt the high heat input welding method to significantly reduce manufacturing costs and improve the production efficiency.

General high heat input welding steel may bear heat input between 100 kJ/cm and 400 kJ/cm, however, with the development of architectures, ships and other industries, further requirements are put forward for a higher heat input welding technology, and rolled steel is required to still have a high mechanical property at a 500-1500 kJ/cm ultra-high heat input, so as to ensure the safety and reliability of the engineering structure.

In the prior art, some ultra-high heat input welding high-strength steel and production methods are provided, however, a large amount of nickel elements or components with high prices such as calcium magnesium cored wires and zirconium calcium cored wires are mostly required to be added in a smelting process of rolled steel to improve low-temperature toughness of a welded joint under a high heat input welding condition, thereby greatly increasing the production cost. In addition, these technologies will improve the property of the rolled steel from the perspective of alloy compositions, it is difficult to control constituent contents on technological operation, the smelting process is prolonged, and the production efficiency is reduced.

It will have a wide application prospect in a case that a method for producing ultra-high heat input welding high-strength steel with high properties, without expensive components and with a shortened smelting process may be provided.

CN 114 703 424 A discloses a high heat input welding steel plate which comprises the following chemical components in percentage by mass: less than or equal to 0.1% of C, less than or equal to 0.15% of Si, less than or equal to 0.004% of S, 1.5-4.5% of Mn + Cr + Ni + Cu, 0.03-0.3% of Ti + Mg + Zr + Ca, 0.03-0.2% of Ti + Mg and the balance of Fe and inevitable impurities, the mass ratio of Cr to Ni to Cu is 1: 2: 1, the carbon equivalent Ceq is 0.36-0.42, and Ceq = C + Mn/6 + (Cr + Mo + V)/5 + (Ni + Cu)/15. The percentage content of acicular ferrite of the steel plate is 80% or above, the size of the acicular ferrite is 15 microns or below, the yield strength is larger than or equal to 430 MPa, the tensile strength is 550-620 MPa, the ductility is larger than or equal to 25%, and the impact energy at the temperature of-40 DEG C is larger than or equal to 300 J; under the condition that the welding heat input is 600kJ/cm, the tensile strength of a welding heat affected zone is greater than or equal to 540MPa, and the impact energy at-40 DEG C is greater than 150J; and the anti-crack property Kca is greater than or equal to 8500N/mm < 1.5 >. In the manufacturing process of the steel plate, a zirconium-calcium cored wire is added during RH refining, a plate blank is formed through continuous casting after RH tapping, and the plate blank is subjected to recrystallization region rolling and non-recrystallization region rolling, so that formation of acicular ferrite can be promoted, and the crack arrest performance of the steel plate is improved. CN 104 726 787 A discloses a thick steel plate with good low temperature toughness.

### SUMMARY OF THE INVENTION

Therefore, the present application aims to solve the technical problem that defects such as high production cost, large control difficulty, and low production efficiency of ultra-high heat input welding steel in the prior art are overcome, so as to provide ultra-high heat input welding steel and a preparation method therefor.

Thus, the present application provides the following technical solutions:
The present application provides a method for preparing ultra-high heat input welding steel, including the following steps:
a steelmaking step: casting into a slab after converter smelting and LF furnace refining;
a rolling step: heating the slab, two-stage rolling being adopted, wherein first-stage rolling is recrystallization zone rolling, a rolling temperature is in a range from 900°C to 1000°C, and a single pass reduction rate is greater than 20%; performing temperature-holding on a steel plate, and performing second-stage rolling when the temperature drops to 800°C or below, wherein the second-stage rolling is non-recrystallization zone rolling, and an adopted single pass reduction rate is greater than 20%; and controlling a total compression ratio in the rolling step to be 5 or above, wherein a compression ratio of the second-stage rolling accounts for 65-75% of the total compression ratio; and
a cooling step: performing cooling after the rolling step is completed,
wherein a finish rolling temperature of the first-stage rolling is in a range from 900°C to 950°C, and the finish rolling temperature of the rolling step is controlled within a range from 20°C to 50°C above a starting temperature Ar₃ of ferritic transformation;
wherein Ar₃=910-310C-80Mn-20Cu-15Cr-55Ni-80Mo-0.35(H-8), a unit of Ar₃ is °C, H is a target steel plate thickness, and a unit is mm;
wherein a heating temperature of the slab is in a range from 1050°C to 1150°C, and heating time of the slab is 330 min or above;
wherein a cooling speed in the cooling step is 11°C/s or above, and a finish cooling temperature is controlled within a range from 20°C to 40°C above a starting temperature Bₛ of bainite transformation, and then is reduced to 350°Cor below through air-cooling;
wherein Bₛ=630-45Mn-40V-35Si-30Cr-25Mo-20Ni-15W, and a unit of Bₛ is °C;
wherein in a converter smelting step, a ratio of a molten iron content to clean scrap steel is (7-8):1, and a molten iron temperature is in a range from 1350°C to 1450°C;
wherein in a casting step, a casting temperature is controlled at a range from 1540°C to 1560°C, and a casting speed is controlled at a range from 1.1 m/min to 1.3 m/min;
wherein, in percentage by weight, chemical components of the slab comprise: C: 0.05-0.16%, Si: 0.1-0.4%, Mn: 0.9-1.6%, P≤0.01%, S: 0.003-0.02%, Cr: 0.05-0.20%, Ni: 0.1-0.4%, Ti: 0.02-0.04%, Ca: 0.001-0.0025%, and the balance Fe and inevitable impurities.

Optionally, the single pass reduction rate in the first-stage rolling process is in a range from 21% to 23%;
and/or, the single pass reduction rate in the second-stage rolling process is in a range from 21% to 26%.

Optionally, the heating time of the slab is in a range from 330 min to 350 min.

The action and dosage selection of components contained in the present application are specifically described below:
S: as a main element generating hot shortness in a hot rolling process, should be controlled within a reasonable range; and S is combined with Mn in steel to form MnS inclusions, especially when an Mn content in the steel is high, the formed MnS is not only numerous, but also huge in size, and in the hot rolling process, the plasticity of MnS makes MnS extend in a rolling direction, so as to form an MnS inclusion belt in the rolling direction, which seriously damages low-temperature impact toughness, ductility and Z-direction property of a steel plate.
Cr: being capable of effectively improving the hardenability of the steel plate, when the content is greater than 0.1%, combining with an ultra-rapid cooling technology, a structure based on fine acicular ferrite is formed, however, excessive content will also generate an adverse effect on a welding property of the steel plate.
Ni: an effective element for improving strength and low-temperature toughness; however, excessive Ni content will cause difficult removal of oxide skin of the steel plate, such that the surface quality of the steel plate is affected, and Ni is expensive, which will increase manufacturing costs after being excessively added.

The present application further provides ultra-high heat input welding steel, prepared by the above preparation method.

Optionally, according to the ultra-high heat input welding steel, a yield strength of a base material is 460 Mpa or above, a tensile strength is in a range from 560 Mpa to 620 Mpa, a ductility is 26% or above, and -40°C impact energy is 280 J or above; and
optionally, under the condition of welding heat input being 600 kJ/cm, a tensile strength of a welding heat affected zone is 580 Mpa or above, and -40°C impact energy is 220 J or above.

The technical solutions of the present application have the following advantages:
The method for preparing the ultra-high heat input welding steel provided by the present application includes the following steps: the steelmaking step: casting into the slab after converter smelting and LF furnace refining; the rolling stage: heating the slab, two-stage rolling being adopted, wherein the first-stage rolling is recrystallization zone rolling, the rolling temperature is in a range from 900°C to 1000°C, and the single pass reduction rate is greater than 20%; performing temperature-holding on the steel plate, and performing second-stage rolling when the temperature drops to 800°C or below, wherein the second-stage rolling is non-recrystallization zone rolling, and the adopted single pass reduction rate is greater than 20%; controlling the total compression ratio in the rolling step to be 5 or above, wherein the compression ratio of the second-stage rolling accounts for 65-75% of the total compression ratio; and the cooling stage: performing cooling after rolling is completed. The present application breaks through a traditional idea of oxide metallurgy for the first time, adopts a low-temperature large reduction rolling technology to produce the ultra-high heat input welding steel, regulates and controls sizes and distribution of oxides in the steel plate by limiting the single pass reduction rate and the total compression ratio in the two-stage rolling, and the compression ratio in the second-stage rolling and combining with a TMCP technology, and solves the problem of controlling dense distribution of oxide inclusion particles in the steel plate, thereby preparing the ultra-high heat input welding steel. The method has the characteristics of low production cost, easily-controlled production process, simple operation, and suitability for scale production, meanwhile, the oxide content is not controlled by adding expensive components in the steelmaking stage, thus a rolling cycle is shortened, and the production efficiency is improved; and the method further has a high additional value, which is mainly reflected in an excellent mechanical property of the base material and an excellent welding heat affected zone property, especially under a welding condition of high heat input, low temperature toughness of the welding heat affected zone is stable, and the thus method may be widely applied to a variety of large and extra-large steel structures requiring efficient welding. From the point of view of downstream welding users, the present application further improves the welding efficiency, greatly reduces the welding labor strength, saves work welding costs of the users, greatly shortens time of the users for manufacturing steel members at the same time, and creates great value for the users.

According to the method for preparing the ultra-high heat input welding steel provided by the present application, the beneficial control technology for the oxide inclusions in the steel plate is invented, by increasing the rolling compression ratio and the single pass reduction rate, sizes of metallic oxide inclusions in the steel plate are controlled to be lower than valid grain sizes, and thus slight inclusions are fully dispersed and distributed, which promotes generation of intragranular acicular ferrite. In addition, the present application may further regulate and control the area density of oxides in the steel plate, the content and size of the acicular ferrite and the like through limitation of parameters, and then regulates and controls properties of the steel plate.

The ultra-high heat input welding steel provided by the present application is prepared by adopting the specific method of the present application. A percentage content ratio of the acicular ferrite in the prepared steel plate is 75% or above, the size of the acicular ferrite is 17 µm or below, the yield strength of the base material is 460 Mpa or above, the tensile strength is in a range from 560 Mpa to 620 Mpa, the ductility is 26% or above, and the -40°C impact energy is 280 J or above; and under the condition of welding heat input being 600 kJ/cm, the tensile strength of the welding heat affected zone is 580 Mpa or above, and -40°C impact energy is 220 J or above.

### DETAILED DESCRIPTION

Following examples are provided for better further understanding the present application, which is not limited to the preferable embodiment, and do not limit contents and the scope of protection of the present application.

Specific experimental procedures or conditions not indicated in the examples may be performed in accordance with operations or conditions of conventional experimental procedures described in the literature in the field. Used reagents or instruments are all conventional reagent products that can be purchased through the market if not indicated with manufactures.

### Example and Comparative example

A method for preparing ultra-high heat input welding steel includes the following steps:

### 1. Component design and steelmaking technology

In percentage by weight, chemical components of a steel plate include: C: 0.05-0.16%, Si: 0.1-0.4%, Mn: 0.9-1.6%, P≤0.01%, S: 0.003-0.02%, Cr: 0.05-0.20%, Ni: 0.1-0.4%, Ti: 0.02-0.04%, Ca: 0.001-0.0025%, and the balance Fe and inevitable impurities.

The steelmaking technology: a ratio of converter steelmaking molten iron content to clean scrap steel is (7-8):1, a molten iron temperature is in a range from 1350°C to 1450°C, and ferromanganese, ferrosilicon and lime are sequentially added for smelting. LF refining is mainly to control inclusions and regulate alloy components, manganese metal, ferrosilicon and the like are added to regulate components of molten steel, temperature measurement and sampling are performed after being electrified, then continuous deoxidation by diffusion and temperature regulation are performed, and finally, sampling, oxide-stabilizing and steel tapping are performed. A casting temperature is controlled at a range from 1540°C to 1560°C, a casting speed is controlled at a range from 1.1 m/min to 1.3 m/min, and then a continuous cast slab is prepared.

### 2. Rolling technology

1) the slab is heated, a heating temperature is controlled in a range from 1050°C to 1150°C, and heating time is controlled at a range from 330 min to 350 min.
2) the slab is rolled, two-stage control rolling is adopted, first-stage rolling is recrystallization zone rolling, a rolling temperature is controlled to be above a recrystallization critical temperature, the range is in a range from 900°C to 1000°C, a single pass reduction rate is greater than 20%, then temperature-holding is performed on the steel plate, second-stage rolling is performed when the temperature drops to 800°C or below, the second-stage rolling is non-recrystallization zone rolling, an adopted single pass reduction rate is greater than 20%, and a finish rolling temperature is controlled within a range from 20°C to 50°C above Ar₃.

### 3. Cooling technology

After rolling is completed, the steel plate is immediately transported to accelerated cooling control equipment (ACC) with a largest transport speed of a roller way, a cooling speed is required to be 11°C/s or above, a finish cooling temperature is controlled within a range from 20°C to 40°C above Bₛ, and then the steel plate is naturally air cooled to be 350°C or below.

Specific control of components and parameters in each example and comparative example is as follows:

**Table 1. Chemical components**

| | Chemical components (wt%) | | | | | | | | | |
|---|---|---|---|---|---|---|---|---|---|---|
| | C | Si | Mn | P | S | Cr | Ni | Nb | Ti | Ca |
| Example 1 | 0.08 | 0.15 | 1.55 | 0.008 | 0.006 | 0.15 | 0.35 | \ | 0.030 | 0.0015 |
| Example 2 | 0.07 | 0.15 | 1.60 | 0.007 | 0.007 | 0.20 | 0.40 | \ | 0.030 | 0.0015 |
| Example 3 | 0.08 | 0.10 | 1.55 | 0.008 | 0.005 | 0.15 | 0.35 | \ | 0.030 | 0.002 |
| Example 4 | 0.08 | 0.15 | 1.55 | 0.008 | 0.006 | 0.15 | 0.35 | \ | 0.030 | 0.0015 |
| Example 5 | 0.07 | 0.15 | 1.60 | 0.007 | 0.005 | 0.20 | 0.40 | \ | 0.030 | 0.0015 |
| Example 6 | 0.08 | 0.10 | 1.55 | 0.008 | 0.006 | 0.15 | 0.35 | \ | 0.030 | 0.002 |
| Comparative example 1 | 0.08 | 0.10 | 1.55 | 0.008 | 0.006 | 0.15 | 0.35 | \ | 0.030 | 0.002 |
| Comparative example 2 | 0.08 | 0.15 | 1.55 | 0.008 | 0.006 | 0.15 | 0.35 | \ | 0.030 | 0.0015 |
| Comparative example 3 | 0.05 | 0.20 | 1.55 | 0.008 | 0.005 | 0.17 | 0.35 | \ | 0.030 | 0.0015 |
| Comparative example 4 | 0.06 | 0.20 | 1.55 | 0.008 | 0.005 | 0.17 | 0.35 | \ | 0.030 | 0.0015 |
| Comparative example 5 | 0.08 | 0.10 | 1.55 | 0.008 | 0.006 | 0.15 | 0.35 | \ | 0.030 | 0.002 |
| Comparative example 6 | 0.08 | 0.10 | 1.55 | 0.008 | 0.006 | 0.15 | 0.35 | \ | 0.030 | 0.002 |

**Table 2. Steelmaking technology**

| | Molten iron: scrap steel | Molten iron temperature | Casting temperature | Casting speed |
|---|---|---|---|---|
| Example 1 | 7:1 | 1350-1450°C | 1540-1560°C | 1.2m/min |
| Example 2 | 7:1 | 1350-1450°C | 1540-1560°C | 1.2m/min |
| Example 3 | 7:1 | 1350-1450°C | 1540-1560°C | 1.2m/min |
| Example 4 | 7:1 | 1350-1450°C | 1540-1560°C | 1.2m/min |
| Example 5 | 7:1 | 1350-1450°C | 1540-1560°C | 1.2m/min |
| Example 6 | 7:1 | 1350-1450°C | 1540-1560°C | 1.2m/min |
| Comparative example 1 | 7:1 | 1350-1450°C | 1540-1560°C | 1.2m/min |
| Comparative example 2 | 7:1 | 1350-1450°C | 1540-1560°C | 1.2m/min |
| Comparative example 3 | 7:1 | 1350-1450°C | 1540-1560°C | 1.2m/min |
| Comparative example 4 | 7:1 | 1350-1450°C | 1540-1560°C | 1.2m/min |
| Comparative example 5 | 7:1 | 1350-1450°C | 1540-1560°C | 1.2m/min |
| Comparative example 6 | 7:1 | 1350-1450°C | 1540-1560°C | 1.2m/min |

**Table 3. Rolled steel heating and cooling technologies**

| | Slab heating temperature | Heating time | Cooling speed | Finish cooling temperature |
|---|---|---|---|---|
| Example 1 | 1150°C | 330min | 11.5°C/s | 570°C |
| Example 2 | 1150°C | 335min | 11.3°C/s | 573°C |
| Example 3 | 1150°C | 332 min | 11.2°C/s | 576°C |
| Example 4 | 1150°C | 330min | 11.5°C/s | 570°C |
| Example 5 | 1150°C | 335min | 11.3°C/s | 572°C |
| Example 6 | 1150°C | 332 min | 11.2°C/s | 575°C |
| Comparative example 1 | 1150°C | 332 min | 11.2°C/s | 576°C |
| Comparative example 2 | 1150°C | 330min | 11.5°C/s | 570°C |
| Comparative example 3 | 1150°C | 332 min | 11.2°C/s | 583°C |
| Comparative example 4 | 1150°C | 330min | 11.3°C/s | 580°C |
| Comparative example 5 | 1150°C | 332 min | 11.2°C/s | 575°C |
| Comparative example 6 | 1150°C | 332 min | 11.2°C/s | 575°C |

**Table 4. Rolling technology**

| | Recrystallization zone start rolling temperature°C | Single pass reduction rate | Recrystallization zone finish rolling temperature°C | Non-recrystallization zone starting rolling temperature | Single pass reduction rate | Non-recrystallization zone finish rolling temperature | Total compression ratio | Second-stage compression ratio |
|---|---|---|---|---|---|---|---|---|
| Example 1 | 950 | 21%-23% | 910 | 770 | 21%-26% | 750 | 6 | 4 |
| Example 2 | 960 | 21%-23% | 920 | 765 | 21 %-26% | 745 | 6 | 4 |
| Example 3 | 950 | 21%-23% | 910 | 770 | 21%-26% | 750 | 6 | 4 |
| Example 4 | 950 | 21%-23% | 910 | 770 | 21%-26% | 750 | 7 | 5 |
| Example 5 | 960 | 21%-23% | 920 | 765 | 21 %-26% | 745 | 7 | 5 |
| Example 6 | 950 | 21%-23% | 910 | 770 | 21%-26% | 750 | 7 | 5 |
| Comparative example 1 | 950 | 15%-20% | 910 | 770 | 10%-15% | 750 | 5 | 3 |
| Comparative example 2 | 950 | 15%-20% | 910 | 770 | 10%-15% | 750 | 5 | 3 |
| Comparative example 3 | 950 | 15%-20% | 920 | 805 | 10%-15% | 786 | 5 | 3 |
| Comparative example 4 | 950 | 15%-20% | 925 | 803 | 10%-15% | 785 | 5 | 3 |
| Comparative example 5 | 950 | 21%-23% | 910 | 770 | 21%-26% | 750 | 4 | 2 |
| Comparative example 6 | 950 | 15%-20% | 910 | 770 | 15%-20% | 750 | 7 | 5 |

| | | | | | | | | |
|---|---|---|---|---|---|---|---|---|
| Note: Ar₃=910-310C-80Mn-20Cu-15Cr-55Ni-80Mo-0.35(H-8), H is a target steel plate thickness, and each steel plate thickness is 50 mm; and Bₛ=630-45Mn-40V-35Si-30Cr-25Mo-20Ni-15W. | | | | | | | | |

**Table 5. Base material property of steel plate and welded joint property**

| | Type of steel | Base material property | | | | Welded joint property | | |
|---|---|---|---|---|---|---|---|---|
| | | Yield strength MPa | Tensile strength MPa | Ductility% | -40°C impact energy J | Welding heat input kJ/cm | Tensile strength MPa | CGHAZ -40°Cimpact energy J |
| Example 1 | EH40 | 463 | 561 | 27 | 306,301,298 | 500 | 563 | 233,225,239 |
| Example 2 | EH40 | 475 | 580 | 26 | 316,285,301 | 500 | 575 | 235,236,245 |
| Example 3 | EH40 | 464 | 583 | 26 | 287,298,306 | 500 | 571 | 226,241,23 3 |
| Example 4 | EH40 | 473 | 591 | 28 | 316,321,308 | 600 | 583 | 233,225,23 9 |
| Example 5 | EH40 | 495 | 610 | 26 | 336,325,331 | 600 | 595 | 235,236,24 5 |
| Example 6 | EH40 | 484 | 603 | 27 | 307,328,326 | 600 | 591 | 226,241,23 3 |
| Comparative example 1 | EH40 | 433 | 554 | 25 | 241,230,221 | 400 | 521 | 124,136,11 5 |
| Comparative example 2 | EH40 | 418 | 548 | 24 | 222,218,247 | 400 | 534 | 154,164,13 8 |
| Comparative example 3 | EH40 | 423 | 547 | 24 | 191,180,198 | 400 | 530 | 85,64,67 |
| Comparative example 4 | EH40 | 435 | 539 | 25 | 202,188,197 | 400 | 528 | 76,74,69 |
| Comparative example 5 | EH40 | 431 | 544 | 24 | 223,201,230 | 400 | 523 | 134,125,14 0 |
| Comparative example 6 | EH40 | 424 | 551 | 25 | 201,220,211 | 400 | 538 | 111,130,13 2 |

**Table 6. Steel plate physical property**

| | Ferrite ratio, % | Acicular ferrite size, µm | Area density of oxides in steel plate |
|---|---|---|---|
| Example 1 | 76 | 17 | 1230 |
| Example 2 | 77 | 16 | 1250 |
| Example 3 | 76 | 17 | 1230 |
| Example 4 | 82 | 14 | 1450 |
| Example 5 | 83 | 12 | 1480 |
| Example 6 | 83 | 12 | 1470 |
| Comparative example 1 | 63 | 23 | 950 |
| Comparative example 2 | 62 | 23 | 940 |
| Comparative example 3 | 60 | 25 | 920 |
| Comparative example 4 | 60 | 25 | 930 |
| Comparative example 5 | 65 | 22 | 970 |
| Comparative example 6 | 64 | 23 | 960 |

Obviously, the above examples are only intended to clearly illustrate the given instances, but do not limit embodiments. For those of ordinary skill in the art, other variations or changes in different forms may further be made within the scope of the appended claims. It is not necessary or possible to exhaust all embodiments herein. Obvious variations or changes derived therefrom still remain within the scope of the appended claims.

## Claims

1. A method for preparing ultra-high heat input welding steel, comprising the following steps:
a steelmaking step: casting into a slab after converter smelting and LF furnace refining;
a rolling step: heating the slab, two-stage rolling being adopted, wherein first-stage rolling is recrystallization zone rolling, a rolling temperature is in a range from 900°C to 1000°C, and a single pass reduction rate is greater than 20%; performing temperature-holding on a steel plate, and performing second-stage rolling when the temperature drops to 800°C or below, wherein the second-stage rolling is non-recrystallization zone rolling, and an adopted single pass reduction rate is greater than 20%; and controlling a total compression ratio in the rolling step to be 5 or above, wherein a compression ratio of the second-stage rolling accounts for 65-75% of the total compression ratio; and
a cooling step: performing cooling after the rolling step is completed;
wherein a finish rolling temperature of the first-stage rolling is in a range from 900°C to 950°C, and the finish rolling temperature of the rolling step is controlled within a range from 20°C to 50°C above a starting temperature Ar₃ of ferritic transformation;
wherein Ar₃=910-310C-80Mn-20Cu-15Cr-55Ni-80Mo-0.35(H-8), a unit of Ar₃ is °C, H is a target steel plate thickness, and a unit is mm;
wherein a heating temperature of the slab is in a range from 1050°C to 1150°C, and heating time of the slab is 330 min or above;
wherein a cooling speed in the cooling step is 11°C/s or above, and a finish cooling temperature is controlled within a range from 20°C to 40°C above a starting temperature Bₛ of bainite transformation, and then is reduced to 350°Cor below through air-cooling;
wherein Bₛ=630-45Mn-40V-35Si-30Cr-25Mo-20Ni-15W, and a unit of Bₛ is °C;
wherein in a converter smelting step, a ratio of a molten iron content to clean scrap steel is (7-8):1, and a molten iron temperature is in a range from 1350°C to 1450°C;
wherein in a casting step, a casting temperature is controlled at a range from 1540°C to 1560°C, and a casting speed is controlled at a range from 1.1 m/min to 1.3 m/min;
wherein, in percentage by weight, chemical components of the slab comprise: C: 0.05-0.16%, Si: 0.1-0.4%, Mn: 0.9-1.6%, P≤0.01%, S: 0.003-0.02%, Cr: 0.05-0.20%, Ni: 0.1-0.4%, Ti: 0.02-0.04%, Ca: 0.001-0.0025%, and the balance Fe and inevitable impurities.

2. The method for preparing ultra-high heat input welding steel according to claim 1, wherein the single pass reduction rate in the first-stage rolling process is in a range from 21% to 23%;
and/or, the single pass reduction rate in the second-stage rolling process is in a range from 21% to 26%.

3. The method for preparing ultra-high heat input welding steel according to claim 1, wherein the heating time of the slab is in a range from 330 min to 350 min.

## Patentansprüche

1. Verfahren zur Herstellung von Schweißstahl mit ultrahoher Wärmeeinbringung, umfassend die folgenden Schritte:
einen Stahlerzeugungsschritt: Gießen zu einer Bramme nach dem Schmelzen im Konverter und dem Raffinieren im LF-Ofen;
einen Walzschritt: Erwärmen der Bramme, wobei das Walzen in zwei Stufen erfolgt, wobei die erste Stufe ein Rekristallisationszonenwalzen ist, die Walztemperatur in einem Bereich von 900 °C bis 1000 °C liegt und die Reduktionsrate bei einem Durchgang größer als 20 % ist; Durchführen eines Temperaturhaltens an einer Stahlplatte und Durchführen eines zweiten Walzschrittes, wenn die Temperatur auf 800 °C oder darunter fällt, wobei der zweite Walzschritt kein Rekristallisationszonenwalzen ist und eine angenommene Einzelstichreduktionsrate größer als 20 % ist; und Steuern eines Gesamtverdichtungsverhältnisses in dem Walzschritt auf 5 oder darüber, wobei ein Verdichtungsverhältnis des zweiten Walzschrittes 65-75 % des Gesamtverdichtungsverhältnisses ausmacht; und
einen Abkühlungsschritt: Durchführen der Abkühlung nach Abschluss des Walzschrittes;
wobei eine Fertigwalztemperatur der ersten Walzstufe in einem Bereich von 900 °C bis 950 °C liegt und die Fertigwalztemperatur des Walzschrittes in einem Bereich von 20 °C bis 50 °C über einer Ausgangstemperatur Ar₃ der ferritischen Umwandlung gesteuert wird;
wobei Ar₃=910-310C-80Mn-20Cu-15Cr-55Ni-80Mo-0,35(H-8) ist, eine Einheit von Ar₃ °C ist, H eine Zielstahlplattendicke ist, und eine Einheit mm ist;
wobei die Heizungstemperatur der Bramme in einem Bereich von 1050 °C bis 1150 °C liegt und die Heizzeit der Bramme 330 Minuten oder mehr beträgt;
wobei die Abkühlgeschwindigkeit im Abkühlungsschritt 11 °C/s oder mehr beträgt und die Endabkühlungstemperatur in einem Bereich von 20 °C bis 40 °C über der Anfangstemperatur Bₛ der Bainitumwandlung gesteuert wird und dann durch Luftkühlung auf 350 °C oder weniger reduziert wird;
wobei Bₛ=630-45Mn-40V-35Si-30Cr-25Mo-20Ni-15W, und eine Einheit von Bₛ °C ist;
wobei in einem Konverterschmelzschritt das Verhältnis von geschmolzenem Eisen zu sauberem Stahlschrott (7-8): 1 beträgt und die Temperatur des geschmolzenen Eisens in einem Bereich von 1350 °C bis 1450 °C liegt;
wobei in einem Gießschritt eine Gießtemperatur in einem Bereich von 1540 °C bis 1560 °C gesteuert wird, und eine Gießgeschwindigkeit in einem Bereich von 1,1 m/min bis 1,3 m/min gesteuert wird;
wobei die chemischen Komponenten der Bramme, in Gewichtsprozent, Folgendes umfassen: C: 0,05-0,16 %, Si: 0,1-0,4 %, Mn: 0,9-1,6 %, P≤0,01 %, S: 0,003-0,02 %, Cr: 0,05-0,20 %, Ni: 0,1-0,4 %, Ti: 0,02-0,04 %, Ca: 0,001-0,0025 %, und der Rest Fe und unvermeidliche Verunreinigungen.

2. Verfahren zur Herstellung von Schweißstahl mit ultrahoher Wärmeeinbringung nach Anspruch 1, wobei die Reduktionsrate bei einem Durchgang in der ersten Walzstufe in einem Bereich von 21 % bis 23 % liegt;
und/oder die Reduktionsrate in einem Durchgang in der zweiten Walzstufe liegt in einem Bereich von 21 % bis 26 %.

3. Verfahren zur Herstellung von Schweißstahl mit ultrahoher Wärmeeinbringung nach Anspruch 1, wobei die Erhitzungszeit der Bramme in einem Bereich von 330 min bis 350 min liegt.

## Revendications

1. Procédé de préparation d'un acier de soudage à apport thermique ultra-élevé, comprenant les étapes suivantes :
une étape d'élaboration de l'acier : coulée en brame après fusion au convertisseur et affinage au four LF ;
une étape de laminage : le chauffage de la brame, un laminage en deux phases étant adopté, dans lequel le laminage de la première phase est un laminage en zone de recristallisation, la température de laminage est comprise dans une plage allant de 900 °C à 1 000 °C, et le taux de réduction par passe unique est supérieur à 20 % ; le maintien en température de la tôle d'acier, et l'exécution du laminage de la seconde phase lorsque la température descend à 800 °C ou moins, dans lequel le laminage de la seconde phase est un laminage en zone de non-recristallisation, et le taux de réduction par passe unique adopté est supérieur à 20 % ; et la régulation du rapport de compression total lors de l'étape de laminage pour qu'il soit de 5 ou plus, dans lequel le rapport de compression du laminage de la seconde phase représente 65 à 75 % du rapport de compression total ; et
une étape de refroidissement : l'exécution d'un refroidissement après que l'étape de laminage est achevée ;
dans lequel une température de fin de laminage du laminage de première phase est comprise dans une plage allant de 900 °C à 950 °C, et la température de fin de laminage de l'étape de laminage est régulée dans une plage allant de 20 °C à 50 °C au-dessus d'une température de début de transformation ferritique Ar₃ ;
dans lequel Ar₃ = 910 - 310C - 80Mn - 20Cu - 15Cr - 55Ni - 80Mo - 0,35 (H-8), l'unité de Ar₃ est le °C, H est l'épaisseur cible de la tôle d'acier, et l'unité est le mm ;
dans lequel une température de chauffage de la brame est comprise dans une plage allant de 1 050 °C à 1 150 °C, et le temps de chauffage de la brame est de 330 min ou plus ;
dans lequel une vitesse de refroidissement lors de l'étape de refroidissement est de 11 °C/s ou plus, et une température de fin de refroidissement est régulée dans une plage allant de 20 °C à 40 °C au-dessus d'une température de début de transformation bainitique Bₛ, puis est réduite à 350 °C ou moins par refroidissement à l'air ;
dans lequel Bₛ = 630 - 45Mn - 40V - 35Si - 30Cr - 25Mo - 20Ni - 15W, et l'unité de Bₛ est le °C ;
dans lequel, lors d'une étape de fusion au convertisseur, le rapport entre la teneur en fonte liquide et les ferrailles propres est de (7-8):1, et la température de la fonte liquide est comprise dans une plage allant de 1 350 °C à 1 450 °C ;
dans lequel, lors d'une étape de coulée, une température de coulée est régulée dans une plage allant de 1 540 °C à 1 560 °C, et une vitesse de coulée est régulée dans une plage allant de 1,1 m/min à 1,3 m/min ;
dans lequel, en pourcentage en poids, les composants chimiques de la brame comprennent : C : de 0,05 à 0,16 %, Si : de 0,1 à 0,4 %, Mn : de 0,9 à 1,6 %, P ≤ 0,01 %, S : de 0,003 à 0,02 %, Cr : de 0,05 à 0,20 %, Ni : de 0,1 à 0,4 %, Ti : de 0,02 à 0,04 %, Ca : de 0,001 à 0,0025 %, le reste est du Fe et des impuretés inévitables.

2. Procédé de préparation d'un acier de soudage à apport thermique ultra-élevé selon la revendication 1, dans lequel le taux de réduction par passe unique lors du processus de laminage de première phase est compris dans une plage allant de 21 % à 23 % ;
et/ou le taux de réduction par passe unique lors du processus de laminage de seconde phase est compris dans une plage allant de 21 % à 26 %.

3. Procédé de préparation d'un acier de soudage à apport thermique ultra-élevé selon la revendication 1, dans lequel le temps de chauffage de la brame est compris dans une plage allant de 330 min à 350 min.
